# EUROPEAN PATENT SPECIFICATION

(11) **EP 2 927 990 B1**
(45) Date of publication and mention of the grant of the patent: **10.01.2018**
(21) Application number: 15160718.1
(22) Date of filing: 25.03.2015
(51) Int. Cl.: H01M 2/10, H01M 10/658, H01M 2/34, H01M 2/12, H01M 10/42

(54) **ENERGY STORAGE APPARATUS**
ENERGIESPEICHERVORRICHTUNG
APPAREIL DE STOCKAGE D'ÉNERGIE

(30) Priority: 31.03.2014 JP 2014073076
(43) Date of publication of application: 07.10.2015
(73) Proprietor: GS Yuasa International Ltd., Kisshoin, Minami-ku, Kyoto-shi, Kyoto 601-8520 (JP)
(72) Inventor: Ohshiba, Masashi, Kyoto-shi, Kyoto 601-8520 (JP); Koyama, Hiroyasu, Kyoto-shi, Kyoto 601-8520 (JP); Fujisawa, Kazuya, Kyoto-shi, Kyoto 601-8520 (JP); Mizukawa, Yuta, Kyoto-shi, Kyoto 601-8520 (JP)
(74) Representative: Grünecker Patent- und Rechtsanwälte PartG mbB

(56) References cited:
- EP-A1- 2 569 811
- US-A1- 2010 073 005
- US-A1- 2013 004 813
- US-A1- 2013 273 404

## Description

### FIELD

The present invention relates to an energy storage apparatus which includes an energy storage module where an energy storage device is accommodated in an outer covering, and a heat-sensitive components which is disposed on a side of the energy storage module.

### BACKGROUND

There has been known the structure in which, on a side of an energy storage device (a single battery), a heat insulation member which performs heat insulation for preventing heat of the energy storage device from being transferred to the surrounding is provided (see JP-A-2004-362879, for example).

US 2013/0004813 A1 relates to a battery module including a plurality of battery cells and a cover, each battery cell having a vent portion aligned in one direction, and the cover being over the vent portions, the cover including an internal cavity and at least a portion of the internal cavity including a heat-resistance member.

EP 2 569 811 A1 relates to an energy storage module for a device for supplying voltage, in particular to a motor vehicle, said device being constructed from a number of energy storage modules said energy storage module being constructed from several prismatic storage cells, which are arranged one behind the other so as to be stacked in at least one row and which are clamped between two end plates by means of tension rods. The energy storage module according to the invention is characterized in that each row of storage cells is separated from the end plates and the tension rods by an insulating jacket that completely encircles the row of storage cells and that has electrical insulation properties.

### SUMMARY

In the above-mentioned conventional configuration, although the heat insulation between the energy storage devices can be performed, no consideration has been taken into account with respect to an effect of heat from an energy storage module in which a plurality of energy storage devices are accommodated. The energy storage module that accommodates plural energy storage devices is likely to have a temperature higher than a temperature of a single energy storage device.

An object of the present invention to provide an energy storage apparatus where an energy storage module and a heat-sensitive component
are arranged next to each other, wherein an effect of heat from the energy storage module exerted on the heat-sensitive component can be reduced.

An energy storage apparatus according to an aspect of the present invention includes: an energy storage module including one or more energy storage devices; a heat-sensitive component which is disposed on a side of the energy storage module and is degraded in function due to heat; and a heat insulation member which is disposed between the energy storage module and the heat-sensitive component.

### BRIEF DESCRIPTION OF THE DRAWINGS

Figs. 1A and 1B show a portion of an external appearance of an energy storage apparatus according to an embodiment of the present invention in a perspective manner;
Figs. 2A and 2B show a front side of the energy storage apparatus according to the embodiment as viewed in the X axis direction;
Fig. 3 shows an external appearance of an energy storage module according to the embodiment of the present invention in a perspective manner;
Fig. 4 shows components of the energy storage module according to the embodiment of the present invention in an exploded and perspective manner;
Fig. 5 shows components of a unit module according to the embodiment of the present invention in an exploded and perspective manner;
Fig. 6 shows a cross section of the unit module according to the embodiment of the present invention taken along Y-Z plane;
Fig. 7 shows a region R3 surrounded by a broken line in the cross section of the unit module shown in Fig. 6 in an enlarged manner;
Fig. 8 shows a cross section of the unit module according to the embodiment of the present invention taken along X-Z plane;
Fig. 9A and Fig. 9B show a front side of an energy storage apparatus according to a first modification of the embodiment of the present invention as viewed in the X axis direction;
Fig. 10A and Fig. 10B show a front side of an energy storage apparatus according to a second modification of the embodiment of the present invention as viewed in the X axis direction;
Figs. 11A and 11B show a front side of an energy storage apparatus according to a third modification of the embodiment of the present invention as viewed in the X axis direction;
Figs. 12A and 12B show a portion of an external appearance of the energy storage apparatus according to an embodiment of the present invention in a perspective manner;
Fig. 13A shows a connection portion of the energy storage apparatus according to the embodiment of the present invention using a bus bar in an enlarged manner;
Fig. 13B shows a connection portion of an energy storage apparatus according to a fifth modification of the embodiment of the present invention using a lead line in an enlarged manner; and
Fig. 14 shows a front side of an energy storage apparatus according to a sixth modification of the embodiment of the present invention as viewed in the X axis direction.

### DESCRIPTION OF EMBODIMENTS

An energy storage apparatus according to a first aspect of the present invention includes: an energy storage module including one or more energy storage devices; a heat-sensitive component which is disposed on a side of the energy storage module and is degraded in function due to heat; and a heat insulation member which is disposed between the energy storage module and the heat-sensitive component.

With this configuration, the heat insulation member is disposed between the energy storage module and the heat-sensitive component. Accordingly, it is possible to suppress the transfer of heat generated in the energy storage module to the heat-sensitive component. As a result, an adverse effect caused by the transfer of heat from the energy storage module to the heat-sensitive component can be reduced.

Each energy storage device has a safety valve, the energy storage module has a discharge port for discharging a substance through the safety valve to the outside, and the heat insulation member is arranged between the discharge port of the energy storage module and the heat-sensitive component.

With this configuration, even when a gas of high temperature is discharged through the discharge port of the energy storage module, since the heat insulation member is disposed between the discharge port and the heat-sensitive component, an adverse effect of a gas to be discharged through the discharge port exerted on the heat-sensitive component can be reduced.

The one or more energy storage devices may include, on a surface where the safety valve is disposed, a positive terminal and a negative terminal projecting toward the outside, the safety valve may be disposed between the positive terminal and the negative terminal, and the energy storage apparatus may further include an electric member which is disposed in a space defined between the positive terminal and the negative terminal.

With this configuration, since the electric member is disposed in the space defined between the positive terminal and the negative terminal, the space defined between the positive terminal and the negative terminal can be effectively utilized. Accordingly, the energy storage module can be formed into a compact shape. Further, in forming the energy storage module into a compact shape in this manner, the electric member is disposed at a position which faces the safety valve. A substance discharged through the safety valve is discharged through the discharge port formed on a side of the energy storage module for passing through a path which avoids the electric member. Even in the energy storage module having such a structure, the heat insulation member is arranged between the discharge port and the heat-sensitive component and hence, it is possible to reduce an adverse effect of the gas to be discharged through the discharge port exerted on the heat-sensitive component.

The energy storage apparatus may further include a mounting shelf on which the energy storage module is mounted, and the heat insulation member may be mounted on the mounting shelf in an erected manner.

With this configuration, the heat insulation member can be easily disposed on a side of the energy storage module.

The heat-sensitive component may be electric equipment, and the electric equipment may include a resin-made outer covering.

With this configuration, even when the outer covering of the electric equipment which is the heat-sensitive component is made of a resin, since the heat insulation member is disposed between the energy storage module and the electric equipment, it is possible to prevent the outer covering of the electric equipment from being deformed due to heat generated by the energy storage module.

The heat insulation member may be made of a material having a higher heat insulation property than a material used for forming the outer covering.

With this configuration, it is possible to prevent with certainty the outer covering of the electric equipment from being deformed due to heat generated by the energy storage module.

The energy storage module may further include module outer covering which accommodates the one or more energy storage devices, the module outer covering may have a side wall with an opening formed, and the heat insulation member may face at least the opening.

With this configuration, even when the opening is formed in the module outer covering of the energy storage module, and the energy storage device accommodated in the inside of the module outer covering is exposed to a space outside the energy storage module, the heat insulation member is arranged between the energy storage module and the electric equipment. Accordingly, it is possible to suppress the transfer of heat generated by the energy storage device accommodated in the module outer covering to the electric equipment. As a result, an adverse effect caused by the transfer of heat from the energy storage device to the electric equipment can be reduced.

The energy storage apparatus may further include a connection member which connects the energy storage module and the heat-sensitive component to each other, and the heat insulation member may be arranged at a position where the heat insulation member does not interfere with the connection member.

Accordingly, mounting of the heat insulation member or the mounting of the connection member can be performed easily.

A recessed portion may be formed on the mounting shelf, the heat insulation member may have a projecting portion which engages with the recessed portion by fitting engagement, and the heat insulation member may be mounted on the mounting shelf in an erected manner due to engagement of the projecting portion with the recessed portion by fitting engagement.

By making the projecting portion formed on the heat insulation member engage with the recessed portion formed on the mounting shelf by fitting engagement, the heat insulation member can be mounted on the mounting shelf in an erected manner. Accordingly, the heat insulation member can be easily disposed on a side of the energy storage module.

The energy storage apparatus may further include a support member which supports a lower portion of the energy storage module, and the heat insulation member may be connected to the support member.

With this configuration, by merely connecting the heat insulation member to the support member which supports a lower portion of the energy storage module, the heat insulation member can be disposed on a side of the energy storage module. As a result, the heat insulation member can be easily mounted.

The energy storage apparatus may further include a rail disposed on the mounting shelf, the energy storage module may have a lower portion provided with a slide portion to be slidably connected to the rail, and the heat insulation member may be connected to the rail.

With this configuration, the heat insulation member can be arranged on a side of the energy storage module by merely connecting the heat insulation member to the rail. As a result, the heat insulation member can be easily mounted.

A notch or a through hole may be formed in the heat insulation member at a position where the connection member passes.

With this configuration, a range where the heat insulation member is arranged can be widened as wide as possible between the energy storage module and the electric equipment. Accordingly, even when the energy storage module and the electric equipment are electrically connected with each other by the connection member, it is possible to effectively perform the heat insulation between the energy storage module and the electric equipment.

According to the aspects of the present invention, in the energy storage apparatus in which the energy storage module and the heat-sensitive component are arranged next to each other, an effect of heat from the energy storage module exerted on the heat-sensitive component can be reduced.

Hereinafter, an energy storage apparatus according to an embodiment of the present invention is described by reference to drawings. The embodiment described hereinafter shows preferred specific examples of the present invention. Numerical values, shapes, materials, components, arrangement positions and connection states of the component and the like shown in the following embodiment are merely examples, and these are not intended to be used for limiting the present invention. Out of the components described in the following embodiment, components which are not described in the independent claim describing an uppermost concept are described as optional components.

### (Embodiment)

Firstly, the configuration of an energy storage apparatus 500 is described.

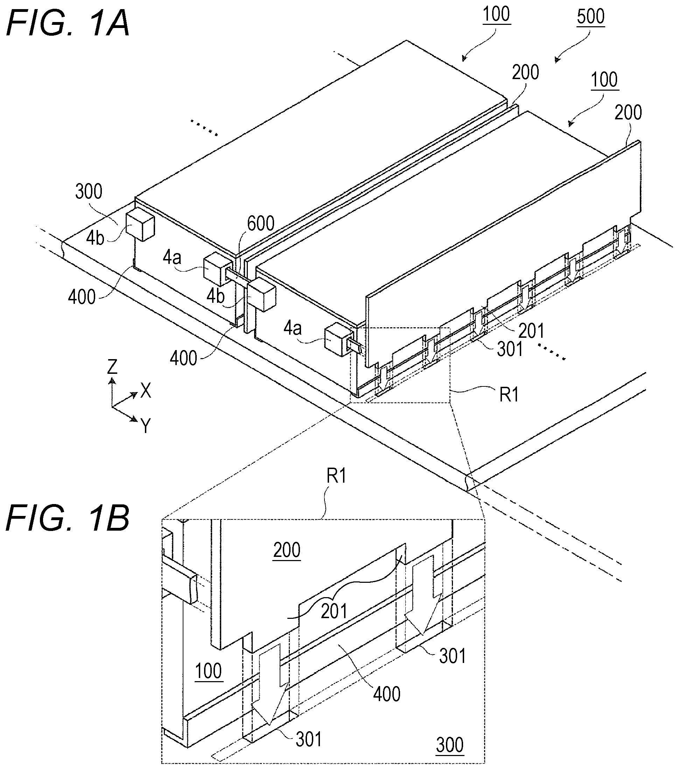

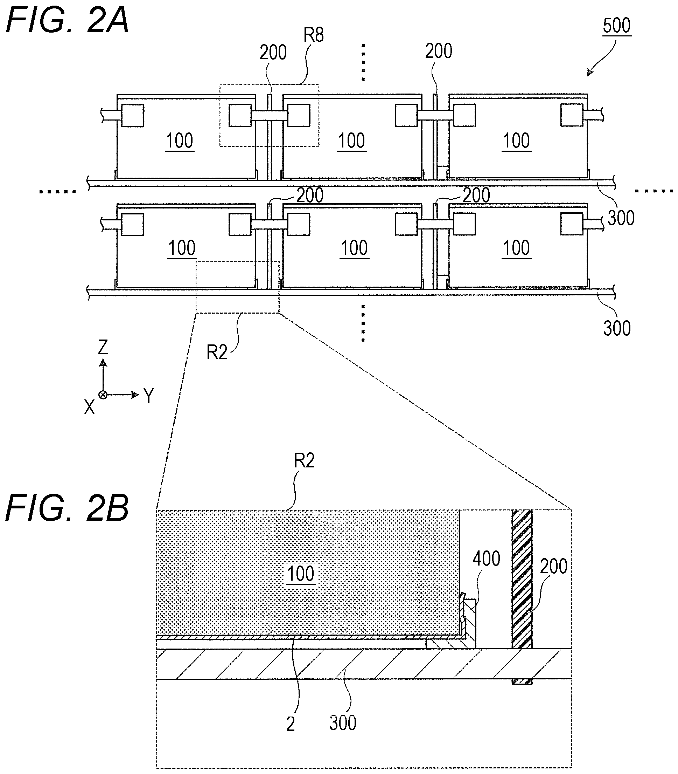

Fig. 1 shows a portion of an external appearance of the energy storage apparatus 500 according to the embodiment of the present invention in a perspective manner. To be more specific, Fig. 1A shows a portion of an external appearance of the energy storage apparatus 500 in a perspective manner, and Fig. 1B shows a region R1 surrounded by a broken line in Fig. 1A in an enlarged manner. Fig. 2 shows a front side of the energy storage apparatus 500 according to the embodiment of the present invention as viewed in the X axis direction. To be more specific, Fig. 2A shows a front side of the energy storage apparatus 500 as viewed in the X axis direction, and Fig. 2B shows a region R2 surrounded by a broken line in Fig. 2A in an enlarged manner.

The energy storage apparatus 500 is a device which can be charged with electricity from the outside and can discharge electricity to the outside. For example, the energy storage apparatus 500 is a device of a high voltage used for energy storage application or power source application.

As shown in the figures, the energy storage apparatus 500 includes: a plurality of energy storage modules 100; heat insulation members 200, a mounting shelf 300, and rails 400.

The plurality of energy storage modules 100 each have a rectangular parallelepiped shape elongated in the x axis direction. Each of the plurality of energy storage modules 100 is configured such that a positive external terminal cover 4a which is a cover for a positive external terminal described later and a negative external terminal cover 4b which is a cover for a negative external terminal described later are mounted on a minus-side side surface of the energy storage module 100 in the X axis direction. The plurality of energy storage modules 100 are configured such that the positive external terminal in the inside of the positive external terminal cover 4a and the negative external terminal in the inside of the negative external terminal cover 4b are electrically connected to each other in series by a bus bar 600 which constitutes the connection member. The energy storage apparatus 500 is charged with electricity from the outside and discharges electricity to the outside via the positive external terminal and the negative external terminal of the energy storage modules disposed on both ends of the plurality of energy storage modules 100 which are electrically connected to each other by the bus bars 600. The connection of the plurality of energy storage modules 100 is not limited to the connection in series, and the plurality of energy storage modules 100 may be connected in parallel, or may be connected in combination of the series connection and the parallel connection. The detailed configuration of the energy storage module 100 is described later.

The heat insulation members 200 are arranged between the plurality of energy storage modules 100. The heat insulation member 200 is a rectangular flat-plate-shaped heat insulation member. The heat insulation members 200 each have a shape and a size corresponding to side surfaces of the plurality of energy storage modules 100 in the Y axis direction. That is, the heat insulation members 200 are arranged so as to cover the side surfaces of the plurality of energy storage modules 100 in the Y axis direction. The heat insulation members 200 are formed of a heat insulation member made of mica or the like, for example. To be more specific, as one example of a heat insulation member which forms the heat insulation member 200, a dammar material which is constituted by stacking mica flakes and bonding the mica flakes is named.

Further, the heat insulation members 200 are arranged at positions where the heat insulation members 200 do not interfere with the respective bus bars 600. That is, the heat insulation members 200 are arranged on a more plus-side region than the bus bars 600 in the X axis direction. As described above, since the heat insulation members 200 are arranged at the positions where the heat insulation members 200 do not interfere with the respective bus bars 600, the mounting of the heat insulation members 200 or the mounting of the bus bars 600 can be facilitated.

The mounting shelf 300 is formed of a plate-like member elongated in the Y axis direction. The mounting shelf 300 is a shelf on which the plurality of energy storage modules 100 are mounted next to each other in the Y axis direction. A plurality of slits 301 which constitute recessed portions are formed on the mounting shelf 300 along the X axis direction. The plurality of slits 301 are formed between the plurality of energy storage modules 100. These slits are provided for mounting the heat insulation members 200 in an erected manner between the plurality of energy storage modules 100.

Further, the heat insulation members 200 are detachably mounted on the mounting shelf 300. To be more specific, the heat insulation member 200 has a plurality of projecting portions 201 which are fitted in the plurality of slits 301 formed in the mounting shelf 300. The heat insulation member 200 is mounted in an erected manner on the mounting shelf 300 by making the plurality of projecting portions 201 engage with the plurality of slits 301 by fitting engagement.

The rails 400 are each formed of a metal-made member having an L-shaped cross section and extending in the X axis direction. The rails 400 are arranged on the mounting shelf 300 such that a plurality of pairs of rails 400 each of which consists of two rails 400 are arranged at predetermined intervals in the Y axis direction. To be more specific, the pair of rails 400 is arranged such that L-shaped bottom surfaces of the pair of rails 400 face each other, and a distance between side surfaces of the pair of rails 400 which are disposed in an erected manner in the Z axis direction agrees with the width of the energy storage module 100 in the Y axis direction. That is, the pair of rails 400 consisting of two rails 400 is arranged corresponding to one energy storage module 100. The pair of rails 400 consisting of two rails is slidably connected to a lower plate 2 which constitutes a sliding portion mounted on a lower portion of the energy storage module 100. Due to such a configuration, the energy storage module 100 can be slid in the X axis direction which is the depth direction of the mounting shelf 300 by making use of the rails 400 thus being easily arranged at a predetermined position. Here, a stopper for restricting the sliding of the energy storage module 100 may be formed on a plus side of the rail 400 in the X axis direction. That is, by providing the stopper to the rail 400, the energy storage module 100 can be easily arranged at the predetermined position with respect to the rail 400 in the X axis direction.

Next, the configuration of the energy storage module 100 is described.

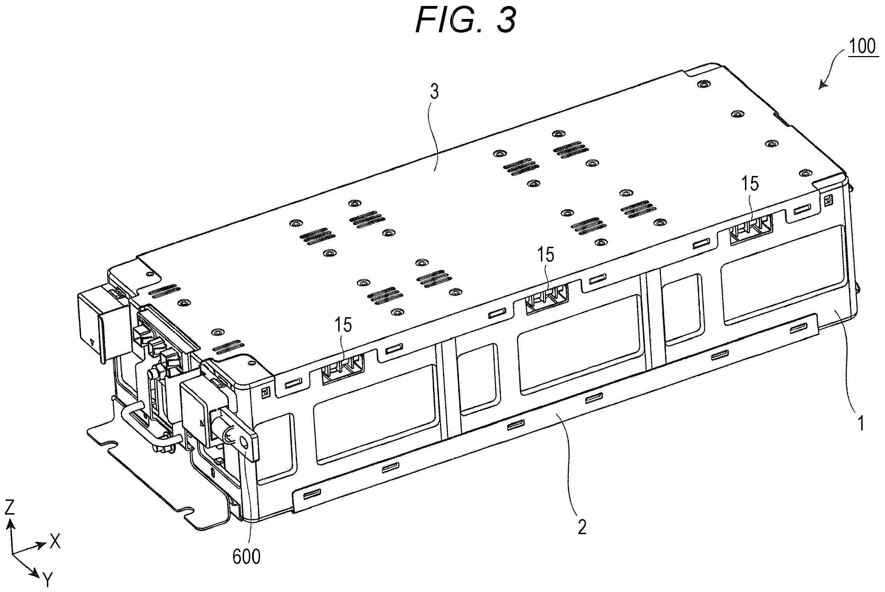

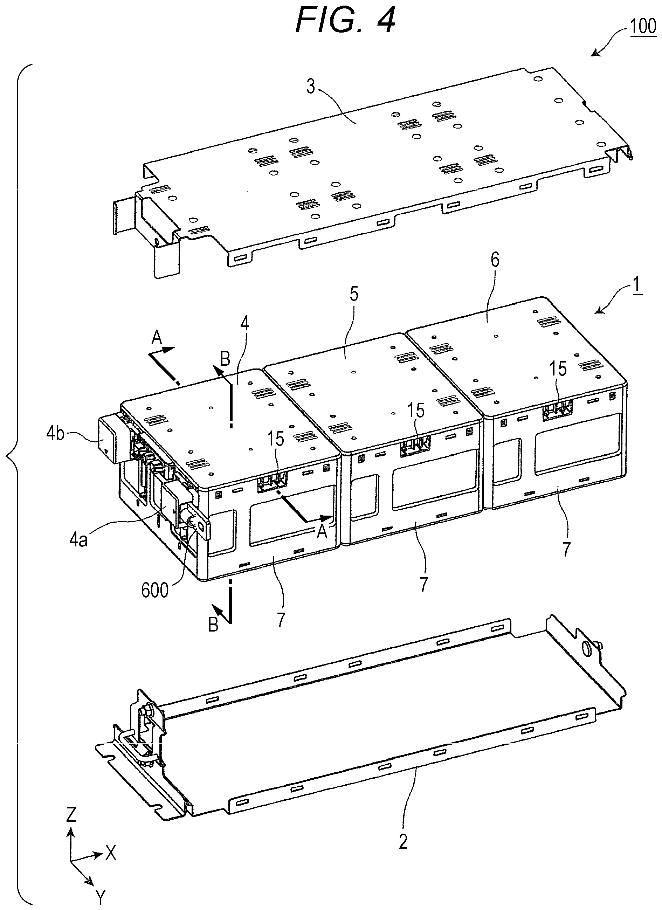

Fig. 3 shows an external appearance of the energy storage module 100 according to the embodiment of the present invention in a perspective manner. Fig. 4 shows components of the energy storage modules 100 according to the embodiment of the present invention in an exploded and perspective manner.

In these figures, the Z axis direction is indicated as the vertical direction, and the description is made hereinafter using the Z axis direction as the vertical direction. However, there may be also a case where the Z axis direction does not indicate the vertical direction depending on a use mode and hence, the Z axis direction is not limited to the vertical direction. The same goes for drawings described hereinafter.

The energy storage module 100 is a device which can be charged with electricity from the outside and can discharge electricity to the outside. For example, the energy storage module 100 is a battery module of a high voltage used for power storage application or power source application.

As shown in these figures, the energy storage module 100 includes: a module set 1 having a plurality of unit modules 4, 5 and 6; a lower plate 2 and an upper plate 3. The energy storage module 100 may be configured to include only one unit module. Further, the energy storage module 100 may be configured to include a cooling device such as a cooling fan for allowing a cooling medium (air or the like) to flow into the inside of the module set 1 at an end portion thereof on a plus side in the X axis direction, for example.

The module set 1 includes the plurality of unit modules 4, 5 and 6 arranged in a row in the X axis direction. Further, the unit module 4 includes: a positive external terminal cover 4a which is a cover for a positive external terminal described later; and a negative external terminal cover 4b which is a cover for a negative external terminal described later. The energy storage module 100 is charged with electricity from the outside or discharges electricity to the outside through the positive external terminal disposed in the inside of the positive external terminal cover 4a and the negative external terminal disposed in the inside of the negative external terminal cover 4b.

The unit modules 4, 5 and 6 are each formed of a rectangular module where one or more energy storage devices are accommodated in an outer covering 7, and have the substantially same configuration. Among the unit modules 4, 5 and 6, by electrically connecting a positive terminal and a negative terminal of the unit modules arranged adjacent to each other, all energy storage devices in the inside of the unit modules 4, 5 and 6 are connected in series. The detailed configuration of these unit modules 4, 5 and 6 is described later.

The lower plate 2 and the upper plate 3 are members for connecting the plurality of unit modules 4, 5 and 6, wherein the lower plate 2 is a connecting member disposed on a lower side and the upper plate 3 is a connecting member disposed on an upper side. That is, the unit modules 4, 5 and 6 are connected to each other by fixing the unit modules 4, 5 and 6 in a sandwiching manner by the lower plate 2 and the upper plate 3.

To be more specific, the lower plate 2 and the upper plate 3 are formed of a planar member, and are formed using metal or the like, for example. Due to such a configuration, the unit modules 4, 5 and 6 can be fixed firmly and in a stable manner. Outer coverings 7 provided to the plurality of unit modules 4, 5 and 6 are mounted on the lower plate 2. The lower plate 2 also functions as a support member which supports a lower portion of the energy storage module 100. Further, as described above, the lower plate 2 also functions as a sliding portion which is connected to the rails 400 in a slidable manner along the rails 400.

Next, the detailed configuration of the unit modules 4, 5 and 6 contained in the module set 1 is described. Since the unit modules 4, 5 and 6 have the substantially same configuration, hereinafter, the description is made with respect to the unit module 4, and the description of the configuration of the unit modules 5 and 6 is omitted.

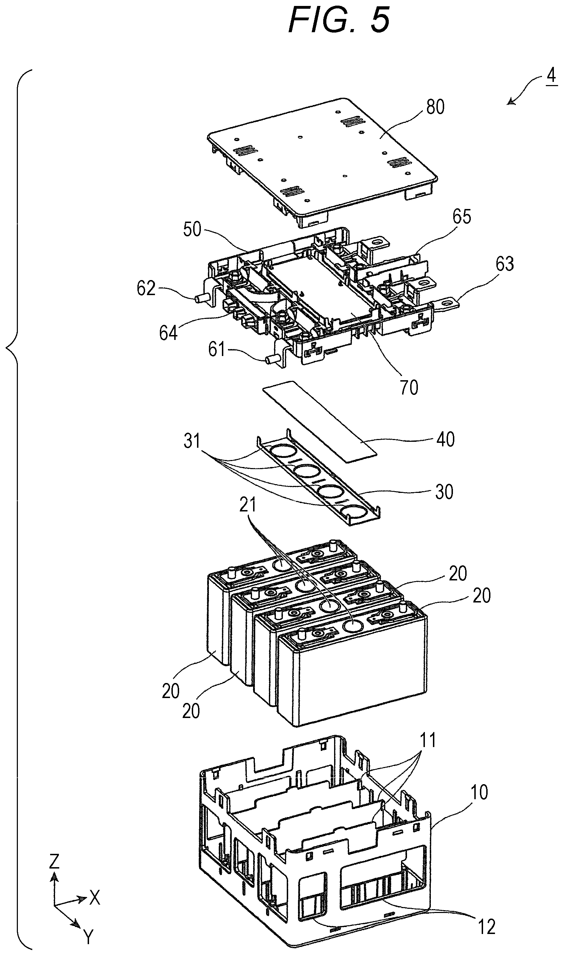

Fig. 5 shows components of the unit module 4 according to the embodiment of the present invention in an exploded and perspective manner.

As shown in Fig. 5, the unit module 4 includes: the outer covering 7 constituted of an outer covering body 10, an inner lid 50 and a lid member 80; and a plurality of energy storage devices 20 (four energy storage devices 20 in the figure), a flow path forming portion 30, a heat insulation member 40, a printed circuit board 70 and the like which are accommodated in the outer covering 7. It is not always necessary that a plurality of energy storage devices 20 are accommodated in the inside of the outer covering 7, and only one energy storage device 20 may be accommodated in the inside of the outer covering 7.

The outer covering 7 is a container (module outer covering) having a rectangular shape (box shape) which is arranged outside the energy storage devices 20 and constitutes an outer covering of the unit module 4. In the outer covering 7, the plurality of energy storage devices 20, the printed circuit board 70 and the like are arranged at predetermined positions so that the plurality of energy storage devices 20, the printed circuit board 70 and the like are protected from an impact or the like. The outer covering 7 is formed using an insulation material such as a resin made of a polycarbonate or a polypropylene (PP), for example. The outer covering 7 prevents the energy storage devices 20, the printed circuit board 70 and the like from coming into contact with a metal member or the like disposed outside the unit module 4.

The outer covering 7 includes the outer covering body 10, the inner lid 50 and the lid member 80. The outer covering body 10 is a bottomed rectangular cylindrical member which constitutes a body of the outer covering 7. Partition members 11 are arranged in the inside of the outer covering body 10. Further, openings 12 are formed on a side surface of the outer covering body 10 in the Y axis direction. The openings 12 are formed for enhancing the heat radiation property of the respective energy storage devices 20 and for reducing weight of the outer covering body 10.

The partition member 11 is a member which is arranged on a side of any one of the energy storage devices 20 which the unit module 4 includes. That is, the partition member 11 is a plate-like member which is arranged between two energy storage devices 20 arranged adjacent to each other, and partitions the two energy storage devices 20. In this embodiment, three partition members 11 are arranged between four energy storage devices 20.

The partition member 11 is a member having a heat insulation property, and is formed using a dammar material, for example. That is, the partition member 11 has a function of preventing the transfer of heat generated by the energy storage device 20 to the neighboring energy storage device 20.

The energy storage device 20 is a secondary battery (single battery) which can be charged with electricity or can discharge electricity therefrom. To be more specific, the energy storage device 20 is a non-aqueous electrolytic secondary battery such as a lithium ion secondary battery. The energy storage device 20 is arranged between two partition members 11 disposed in the inside of the outer covering body 10 or between the partition member 11 and a wall surface of the outer covering body 10, and is accommodated in the inside of the outer covering body 10.

The energy storage devices 20 each include a positive terminal 23 and a negative terminal 24. The positive terminal 23 of the energy storage device 20 which is arranged on a positive external terminal 61 (described in detail later) side out of the plurality of energy storage devices 20 which the energy storage module 100 includes is connected to the positive external terminal 61, and the negative terminal 24 of the energy storage device 20 is connected to the positive terminal 23 of the neighboring energy storage device 20. In the same manner, the negative terminal 24 of the energy storage device 20 which is arranged on a negative external terminal 62 (described in detail later) side out of the plurality of energy storage devices 20 is connected to the negative external terminal 62, and the positive terminal 23 of the energy storage device 20 is connected to the negative terminal 24 of the neighboring energy storage device 20. Further, the positive terminal 23 or the negative terminal 24 of each one of other energy storage devices 20 is connected to the negative terminal 24 or the positive terminal 23 of the neighboring energy storage device 20.

As shown in Fig. 1, Fig. 3 to 5, the positive external terminal cover 4a in which the positive external terminal 61 is arranged and the negative external terminal cover 4b in which the negative external terminal 62 is arranged are arranged on a minus-side side surface of the energy storage module 100 in the X axis direction. That is, the positive external terminal 61 and the negative external terminal 62 are arranged on the minus-side side surface of the energy storage module 100 in the X axis direction. This configuration can be realized as the result of arranging the plurality of energy storage devices 20 next to each other in the Y axis direction as shown in Fig. 5. That is, in connecting the plurality of energy storage devices 20 arranged next to each other in the Y axis direction in series by the bus bars 63, it is possible to provide one energy storage device 20 where the positive terminal 23 is arranged on a minus side in the X axis direction and another energy storage device 20 where the negative terminal 24 is arranged on a minus side in the X axis direction. Due to such a configuration, by directly connecting the positive terminal 23 of one energy storage device 20 to the positive external terminal 61 and by directly connecting the negative terminal 24 of another energy storage device 20 to the negative external terminal 62, the positive external terminal 61 and the negative external terminal 62 can be arranged on the minus-side side surface of the energy storage module 100 in the X axis direction. In this manner, the positive external terminal 61 and the negative external terminal 62 can be arranged on the minus-side side surface of the energy storage module 100 in the X axis direction (that is, one side surface of the energy storage module 100) in a concentrated manner and hence, in connecting the plurality of energy storage modules 100, compared to the case where the positive external terminal and the negative external terminal are arranged on a plurality of side surfaces of the energy storage module 100, the length of the bus bar 600 can be shortened or the structure of the bus bar 600 can be simplified. Further, the connection operation of the bus bars 600 can be performed only on a minus side of the plurality of energy storage modules 100 in the X axis direction and hence, the operational efficiency can be enhanced.

The energy storage devices 20 are each provided with a safety valve 21 on upper surfaces thereof. That is, each energy storage device 20 discharges a gas toward an upper side through the safety valve 21 when an internal pressure of the energy storage device 20 is elevated. The present invention is not limited to the case where all energy storage devices 20 which the unit module 4 includes are each provided with the safety valve 21, and it is sufficient that at least one energy storage device 20 includes the safety valve 21.

The energy storage device 20 is not limited to the non-aqueous electrolytic secondary battery, and may be a secondary battery other than the non-aqueous electrolytic secondary battery or may be a capacitor.

The flow path forming portion 30 is a portion which forms a discharge path for a gas discharged through the safety valve 21 of the energy storage device 20 in combination with the inner lid 50. That is, the flow path forming portion 30 is a planar member which is arranged between the plurality of energy storage devices 20 and the inner lid 50 such that the flow path forming portion 30 strides over the plurality of energy storage devices 20. In the flow path forming portion 30, safety valve openings 31 which are arranged at positions facing the safety valves 21 of the energy storage devices 20 are formed. That is, as shown in Fig. 5, four safety valve openings 31 are formed in the flow path forming portion 30 corresponding to the safety valves 21 of four energy storage devices 20. That is, the flow path forming portion 30 is arranged at a position corresponding to the safety valves 21 of the plurality of energy storage devices 20, and guides a gas discharged through the safety valves 21 to the outside.

The heat insulation member 40 is a rectangular planar heat insulation member which is arranged between the printed circuit board 70 and the energy storage devices 20 which are electric members, and is arranged in the inside of the discharge path. That is, the heat insulation member 40 is arranged in the inside of the discharge path formed by the inner lid 50 and the flow path forming portion 30. To be more specific, the heat insulation member 40 is arranged between the inner lid 50 and the flow path forming portion 30, and is arranged at the position which faces the safety valves 21 and at the position which faces the printed circuit board 70. That is, the heat insulation member 40 is arranged between the inner lid 50 and the safety valves 21.

The heat insulation member 40 is detachably mounted on the inner lid 50. That is, the heat insulation member 40 which is formed as a separate body is made detachable from the inner lid 50. To be more specific, the heat insulation member 40 is detachably mounted on the inner lid 50 by being sandwiched between the inner lid 50 and the flow path forming portion 30. Although the heat insulation member 40 may be formed of any material provided that the heat insulation member 40 is a member having a heat insulation property, the heat insulation member 40 is a dammar material, for example.

The inner lid 50 is a flat rectangular member constituting an inner lid of the outer covering 7, and is arranged above the plurality of energy storage devices 20. The inner lid 50 is a flow path arrangement portion arranged in the discharge path. To be more specific, the inner lid 50 is arranged at a position which faces the safety valves 21, and holds the printed circuit board 70. That is, the inner lid 50 is arranged between the safety valves 21 and the printed circuit board 70, and has a space S1 (described in detail later) where the printed circuit board 70 is arranged. The inner lid 50 has a function of preventing a gas discharged through the safety valves 21 from reaching the printed circuit board 70. Accordingly, a gas discharged through the safety valves does not flow into the space S1.

To be more specific, the inner lid 50 is arranged between the energy storage devices 20, the flow path forming portion 30, and the heat insulation member 40, and the printed circuit board 70. In this manner, the inner lid 50 is arranged on a safety valves 221 side of the energy storage devices 20 and hence, the inner lid 50 also has a function of restricting the movement of the energy storage devices 20 in the direction toward the safety valves 21 side in the inside of the outer covering body 10. That is, the inner lid 50 is fitted in the inside of the outer covering body 10 and presses the plurality of energy storage devices 20 from above thus fixing the plurality of energy storage devices 20 to the outer covering body 10.

In this manner, the inner lid 50 forms the discharge path, holds the printed circuit board 70 and, further, plays a roll of fixing the energy storage devices 20 to the outer covering body 10.

In the inside of the inner lid 50, the positive external terminal 61, the negative external terminal 62, the bus bars 63, an external wiring connecting part 64, and a wiring route forming part 65 are arranged.

The positive external terminal 61 is an external terminal on a positive electrode side arranged in the inside of the positive external terminal cover 4a shown in Fig. 4, and the negative external terminal 62 is an external terminal on a negative electrode side arranged in the inside of the negative external terminal cover 4b shown in Fig. 4. The positive external terminal 61 and the negative external terminal 62 are electrode terminals used for charging the energy storage module 100 with electricity from the outside and for discharging electricity to the outside from the energy storage module 100. That is, the energy storage module 100 is charged with electricity from the outside and discharges electricity to the outside therefrom through the positive external terminal 61 and the negative external terminal 62.

The bus bars 63 are members which are arranged above the inner lid 50. The bus bars 630 are conductive members made of metal or the like, and are connection members which electrically connect the plurality of energy storage devices 200 to each other. To be more specific, in the energy storage devices 20 arranged adjacent to each other, the bus bar 63 connects the positive terminal 23 or the negative terminal 24 of one energy storage device 20 and the negative terminal 24 or the positive terminal 23 of another energy storage device 20.

The external wiring connecting part 64 is a connector connected to external wiring, and connects the external wiring and wiring which is connected to at least one energy storage device 20 out of the plurality of energy storage devices 20.

The wiring route forming part 65 is a member which is arranged between two unit modules so as to straddle between the two unit modules, and forms a wiring path which allows wiring which straddles between two unit modules to pass therethrough.

The printed circuit board 70 is an electric member which is electrically connected to at least one energy storage device 20 out of the energy storage devices 20 which the unit module 4 includes. To be more specific, the printed circuit board 70 is a board capable of acquiring, monitoring and controlling states of the plurality of energy storage devices 20, and the printed circuit board 70 is connected to positive terminals or negative terminals of the plurality of energy storage devices 20 by wiring (lead lines) 701.

To be more specific, the printed circuit board 70 is a control circuit board for monitoring a charge state and a discharge state (a battery state such as a voltage or a temperature) and the like of the plurality of energy storage devices 20. The printed circuit board 70 includes, for example, a control circuit (not shown in the drawings) for performing such monitoring, controlling turning on/off of relays and the communication with other equipment.

The printed circuit board 70 is arranged above the inner lid 50, and is arranged so as to be covered by the lid member 80. That is, the printed circuit board 70 is arranged such that the printed circuit board 70 is protected by the inner lid 50 and the lid member 80 by being sandwiched between the inner lid 50 and the lid member 80. Further, by integrally mounting the electric components on an upper portion of the energy storage module 100 in this manner, the assembling property and the maintenance property of the energy storage module 100 can be enhanced.

It is not always necessary to provide the printed circuit board 70 to the respective unit modules, and the energy storage module 100 may be also configured such that the printed circuit board 70 is provided to only the unit module 4, for example. The unit module may be also configured such that other electric members such as a fuse are arranged on the inner lid 50 as an electric member instead of the printed circuit board 70.

The lid member 80 is a member constituting a lid of the outer covering 7, and is a flat rectangular member which closes an opening of the outer covering body 10.

To be more specific, the plurality of energy storage devices 20, the flow path forming portion 30, the heat insulation member 40, the inner lid 50, the printed circuit board 70 and the like are arranged in the inside of the outer covering body 10 in this order, and the opening of the outer covering body 10 is closed by the lid member 80. By arranging the plurality of energy storage devices 20 which are heavy weight members in a lowermost portion of the unit module 4 in this manner, the stability of the unit module 4 can be enhanced.

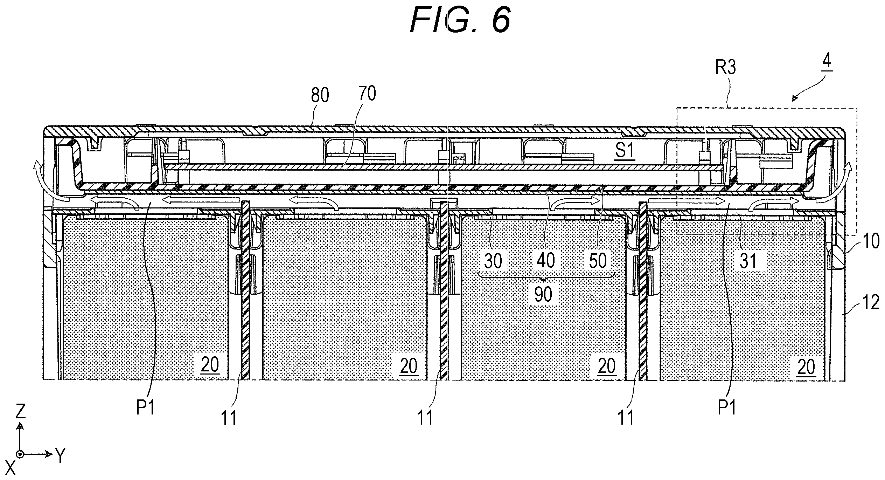

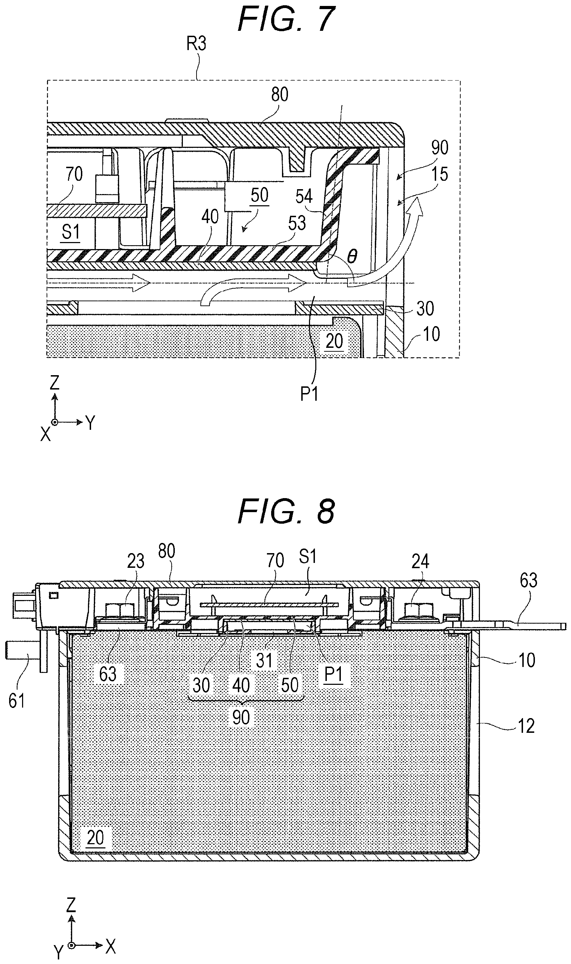

Fig. 6 shows a cross section of the unit module according to the embodiment of the present invention taken along Y-Z plane. To be more specific, Fig. 6 is a view showing the cross section of the unit module 4 shown in Fig. 4 taken along line A-A. Fig. 7 shows a region R3 surrounded by a broken line in Fig. 6 showing the cross section of the unit module in an enlarged manner. Fig. 8 shows a cross section of the unit module according to the embodiment of the present invention taken along X-Z plane. To be more specific, Fig. 8 is a view showing a cross section of the unit module shown in Fig. 4 taken along line B-B.

As shown in Fig. 6 to Fig. 8, the discharge path P1 which is a flow path for a gas discharged through the safety valve 21 of the energy storage device 20 is formed by being surrounded by the inner lid 50, the heat insulation member 40 and the flow path forming portion 30. That is, the discharge portion 90 which forms the discharge path P1 is formed by the inner lid 50, the heat insulation member 40 and the flow path forming portion 30. Provided that the heat resistance and the heat insulation property of the inner lid 50 are ensured, the discharge portion 90 does not need to contain the heat insulation member 40. The discharge path P1 extends along a shape of the flow path forming portion 30. That is, the discharge path P1 discharges a gas generated in the inside of the single battery module to spaces on both sides outside the outer covering 7 in the Y axis direction.

The inner wall surface of the discharge portion 90 is constituted of: the heat insulation member 40 mounted on the flat portion 53 of the inner lid 50, the inclined portion 54 of the inner lid 50, and the flow path forming portion 30.

The inclined portion 54 is formed at areas in the vicinity of discharge ports 15 which constitute both end portions of the discharge portion 90. To be more specific, the inclined portion 54 is inclined upwardly with respect to the Y axis direction by an inclination angel θ. On the other hand, the flow path forming portion 30 opposedly facing the inclined portion 54 extends parallel to the Y axis direction.

The discharge portion 90 is configured such that, in a region where the heat insulation member 40 is arranged, the heat insulation member 40 and the flow path forming portion 30 which is arranged to face the heat insulation member 40 are each formed of a plate-like member extending in the Y axis direction. That is, the discharge path P1 is, in the region where the heat insulation member 40 is arranged, a space which extends in the Y axis direction while holding the width thereof in the X axis direction and the width thereof in the Z axis direction at respective fixed values.

Further, in the discharge portion 90, outside the heat insulation member 40 in the Y axis direction, the discharge path P1 is formed by making the inclined portion 54 and the flow path forming portion 30 face each other. That is, in the discharge path PI, in the region where the inclined portion 54 is formed, the more outwardly the discharge path P1 extends, the more upwardly the inclined portion 54 is inclined at an inclination angle θ, and the flow path forming portion 30 is parallel to the Y axis direction. That is, the discharge path P1 is a space which is formed so as to increase a cross-sectional area of a flow path of the discharge path P1 as the discharge path P1 extends outwardly.

The discharge portion 90 is formed so as to discharge a gas into a space on the Y axis direction side at an upper portion of the side surface of the outer covering 7. The inclined portion 54 formed on the discharge portion 90 is inclined upwardly with respect to the Y axis direction. Due to such a configuration, a gas which passes through the discharge portion 90 can be discharged toward an obliquely upward direction which is the direction inclined upwardly with respect to the Y axis direction through the discharge port 15 of the discharge portion 90 formed on the upper portion of the side surface of the outer covering 7.

As shown in Fig. 6 to Fig. 8, the printed circuit board 70 is arranged in the space S1 defined at the center position of the inner lid 50. That is, the printed circuit board 70 is arranged in the space S1 which is formed on the side of the inclined portion 54 of the discharge portion 90, wherein the space S1 is also a space formed between the positive terminal 23 and the negative terminal 24 of the energy storage device 20. In this manner, the printed circuit board 70 is disposed in the space on the side of the inclined portion 54 and hence, it is possible to effectively make use of the space on the side of the inclined portion 54. Further, the printed circuit board 70 is disposed in the space defined between the positive terminal 23 and the negative terminal 24 formed in a projecting manner from the energy storage device 20 and hence, it is possible to effectively make use of the space defined between the positive terminal 23 and the negative terminal 24. That is, to form the unit module in a compact shape by arranging the printed circuit board 70 in vacant spaces of the plurality of energy storage devices 20 which are arranged next to each other in the Y axis direction, the printed circuit board 70 is arranged between the positive terminal 23 and the negative terminal 24 of each energy storage device 20. That is, the printed circuit board 70 is arranged on the side of the energy storage device 20 where the positive terminal 23 and the negative terminal 24 project (that is, above the energy storage device 20).

The safety valve 21 is mounted on each energy storage device 20 on a side where the positive terminal 23 and the negative terminal 24 project. Accordingly, in an attempt to discharge a substance which is discharged through the safety valve 21 toward the outside of the unit module, to prevent the substance from adversely affecting the printed circuit board 70 by heat or the like, it is necessary to prevent the substance from passing through the space S1 where the printed circuit board 70 is arranged. That is, it is necessary to provide the discharge path P1 below the space S1 where the printed circuit board 70 is provided. The plurality of energy storage devices 20 are arranged next to each other in the Y axis direction, and each energy storage device 20 includes the positive terminal 23 and the negative terminal 24 which are arranged in the X axis direction. That is, a space defined between the positive terminals 23 and the negative terminals 24 of the plurality of energy storage devices 20 extends in the Y axis direction. Accordingly, by forming the discharge portion 90 such that the discharge path P1 extends along the Y axis direction, the configuration is realized where the printed circuit board 70 can be arranged by effectively making use of the space defined between the positive terminal 23 and the negative terminal 24, and it is possible to prevent a substance discharged through the safety valve 21 from exerting an adverse effect on the printed circuit board 70. Further, the discharge portion 90 is formed such that the discharge path P1 extends along the Y axis direction and hence, the discharge port 15 of the discharge portion 90 is formed on the side surface of the energy storage module 100 on a Y axis direction side.

As has been described above, according to the energy storage apparatus 500 of the embodiment of the present invention, a plurality of discharge ports 15 are formed in side surfaces of the energy storage module 100 on Y axis direction sides (three discharge ports 15 in each side surface in this embodiment). The plurality of discharge ports 15 are communicated with each other at the discharge portion 90 in each of the unit module 4, 5 and 6. Accordingly, when a gas is discharged through the safety valve 21 of the energy storage device 20, the gas is discharged through the discharge ports 15 which are formed in the unit module including the energy storage device 20.

As described above, when a gas is discharged through the safety valve of the energy storage device 20, the gas is discharged through the discharge ports 15 and hence, the gas is discharged in the Y axis direction. In the energy storage apparatus 500, the plurality of energy storage modules 100 are arranged next to each other in the Y axis direction. Accordingly, by arranging the heat insulation members 200 between the plurality of energy storage modules 100, it is possible to prevent a high-temperature gas discharged from the energy storage module 100 from reaching the neighboring energy storage module 100. That is, even when a high-temperature gas is discharged through the discharge ports 15 of the energy storage module 100, since the heat insulation member 200 is arranged between the discharge ports 15 and another energy storage module 100 and hence, it is possible to reduce an adverse effect exerted on another energy storage module 100 due to a gas discharged through the discharge ports 15.

Further, the printed circuit board 70 is arranged in the space S1 defined between the positive terminal 23 and the negative terminal 24 of the energy storage device 20 and hence, the space S1 defined between the positive terminal 23 and the negative terminal 24 can be effectively used. Accordingly, the energy storage module 100 can be formed in a compact shape. Further, to form the energy storage module 100 in a compact shape as described above, the printed circuit board 70 is arranged at a position which faces the safety valve 21. A substance discharged through the safety valve 21 passes the discharge path P1 which avoids the printed circuit board 70 and hence, the substance is discharged through the discharge port 15 on a side of the energy storage module 100. Even in the energy storage module 100 having such a structure, the heat insulation member 200 is arranged between the discharge port 15 and another neighboring energy storage module 100 and hence, it is possible to reduce an adverse effect of a gas discharged through the discharge ports 15 exerted on another energy storage module 100.

The heat insulation members 200 are arranged between the plurality of energy storage modules 100. Accordingly, it is possible to prevent the transfer of heat generated by one energy storage module to another energy storage module 100. That is, it is possible not only to prevent a high-temperature gas discharged through the discharge ports 15 but also to suppress the transfer of heat per se generated by one energy storage module 100 to another energy storage module 100. Due to such a configuration, it is possible to reduce an adverse effect caused by the transfer of heat to another energy storage module 100 from one energy storage module 100.

In the energy storage apparatus 500, the heat insulation member 200 is mounted on the mounting shelf 300 in an erected manner by engaging the plurality of slits 301 formed in the mounting shelf 300 and the plurality of projecting portions 201 formed on the heat insulation member 200 with each other by fitting engagement. Due to such a configuration, the heat insulation member 200 can be easily arranged on the side of the energy storage module 100.

The outer covering 7 of the energy storage module 100 is made of a resin. In this manner, even when the outer covering 7 of the energy storage module 100 is made of a resin, the heat insulation member 200 is arranged between one energy storage module 100 and another energy storage module 100 and hence, it is possible to prevent the outer covering 7 of another energy storage module 100 from being deformed due to heat generated by one energy storage module 100.

The openings 12 are formed on the outer covering 7 of the energy storage module 100, and the energy storage devices 20 which are accommodated in the inside of the outer covering 7 are exposed to the outer space of the energy storage module 100. Even in such a configuration, the heat insulation members 200 are arranged between the plurality of energy storage modules 100. Accordingly, it is possible to suppress the transfer of heat generated by the energy storage device 20 accommodated in the outer covering 7 to another energy storage module 100. Due to such a configuration, it is possible to reduce an adverse effect caused by the transfer of heat to another energy storage module 100 from the energy storage device 20. Even when the energy storage module 100 including the outer covering 7 in which the openings 12 are formed receives heat from another energy storage module 100 which is arranged adjacent to the energy storage module 100, the heat insulation members 200 are arranged between the plurality of energy storage modules 100 and hence, it is possible to reduce an amount of heat which the energy storage module 100 receives through the openings 12. Due to such a configuration, it is possible to reduce an adverse effect caused by heat from another energy storage module 100.

### (First modification)

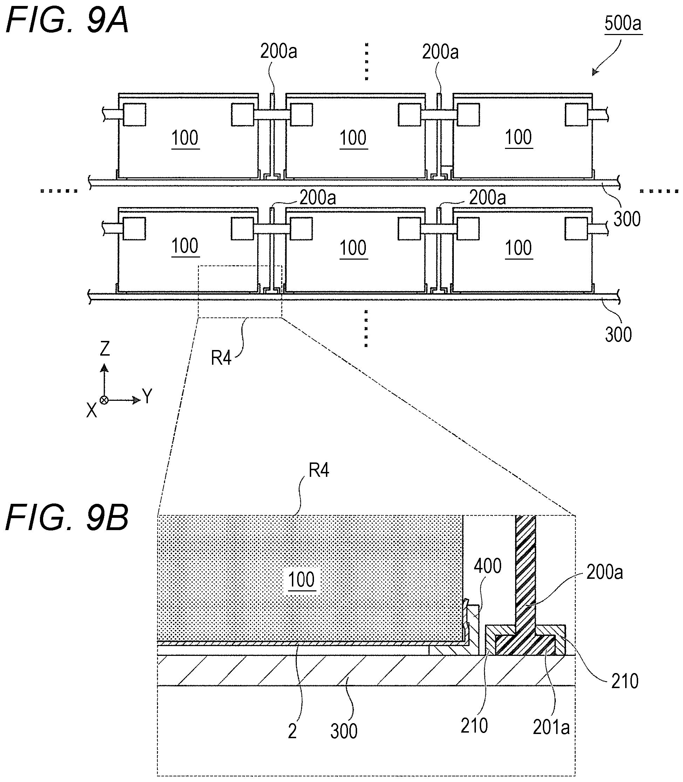

Next, the first modification of the above-mentioned embodiment is described. Fig. 9 shows a front side of an energy storage apparatus 500a according to the first modification of the embodiment of the present invention as viewed in the X axis direction. To be more specific, Fig. 9A shows a front side of the energy storage apparatus 500a as viewed in the X axis direction, and Fig. 9B shows a region R4 surrounded by a broken line in Fig. 9A in an enlarged manner.

As shown in Fig. 9, the energy storage apparatus 500a according to the first modification differs from the energy storage apparatus 500 according to the embodiment with respect to the structure of connecting heat insulation members 200a to a mounting shelf 300. Other configurations are equal to the corresponding other configurations of the energy storage apparatus 500 according to the embodiment and hence, the description of the other configurations is omitted.

A projecting portion 201a which projects along both sides in the Y axis direction from a lower end of the heat insulation member 200a is formed on the heat insulation member 200a instead of the projecting portions 201 of the heat insulation member 200. The projecting portion 201a is formed on the lower end of the heat insulation member 200a in an extending manner in the X axis direction. That is, the lower end of the heat insulation member 200a has a T-shaped cross section as viewed in the X axis direction, and is configured such that the T shape extends in the X axis direction. Further, L-shaped support members 210 which cover an upper surface and side surfaces of the projecting portion 201a are connected to the mounting shelf 300. The support member 210 has an L-shaped cross section as viewed in the X axis direction, and is configured such that the L shape extends in the X axis direction. Two support members 210 are provided for one heat insulation member 200a, and the support members 210 support the projecting portion 201a by pinching the projecting portion 201a from both sides of the heat insulation member 200a in the Y axis direction. End portions of the support members 210 on a minus side in the X axis direction are opened. Accordingly, the heat insulation member 200a is slidable with respect to the support members 210 in the X axis direction. That is, so long as the support members 210 are mounted on the predetermined positions of the mounting shelf 300, the heat insulation member 200a can be easily mounted on the mounting shelf 300 in an erected manner by inserting the projecting portion 201a of the heat insulation member 200a between the pair of support members 210.

### (Second modification)

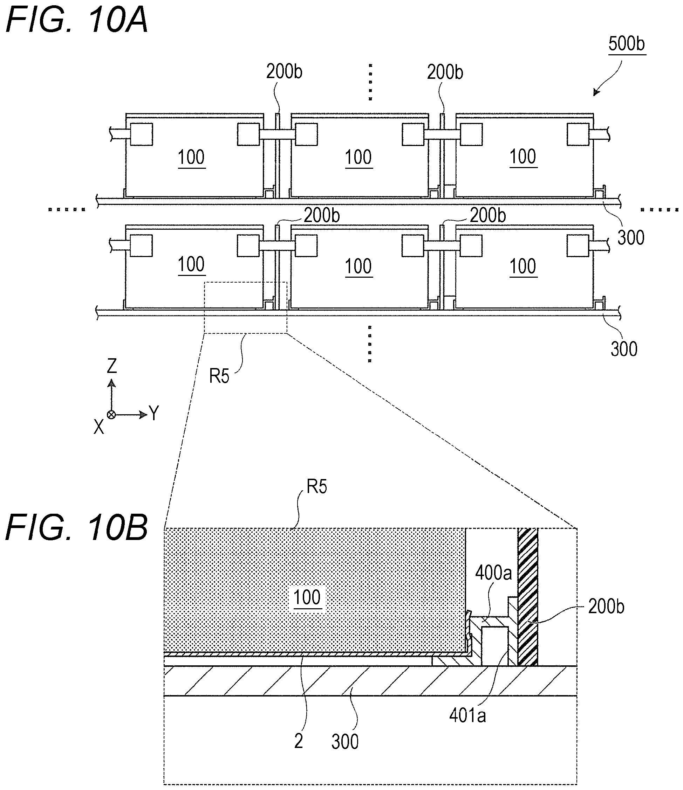

Next, the second modification of the above-mentioned embodiment is described. Fig. 10 shows a front side of an energy storage apparatus 500b according to the second modification of the embodiment of the present invention as viewed in the X axis direction. To be more specific, Fig. 10A shows a front side of the energy storage apparatus 500b as viewed in the X axis direction, and Fig. 10B shows a region R5 surrounded by a broken line in Fig. 10A in an enlarged manner.

As shown in the figure, the energy storage apparatus 500b according to the second modification differs from the energy storage apparatus 500 according to the embodiment with respect to the structure of a rail 400a and the structure of a heat insulation member 200b. Other configurations are equal to the corresponding other configurations of the energy storage apparatus 500 according to the embodiment and hence, the description of the other configurations is omitted.

The rail 400a is a rail arranged on a plus side of an energy storage module 100 in the Y axis direction, and differs from the rail 400 with respect to a point that a heat insulation member supporter 401a is formed on the rail 400a. Further, the heat insulation member 200b differs from the heat insulation member 200 with respect to a point that the heat insulation member 200b is a rectangular plate-like member on which the projecting portions 201 are not formed. A rail which is arranged on a minus side of the energy storage module 100 in the Y axis direction is the rail 400. That is, one of a pair of rails which is arranged corresponding to the energy storage module 100 is the rail 400a.

The heat insulation member supporter 401a is a plate-like member of the rail 400a which is formed on a side opposite to a side where the rail 400a is brought into contact with the energy storage module 100. The heat insulation member supporter 401a has a side surface thereof connected to the heat insulation member 200b. That is, the heat insulation member 200b is connected to the heat insulation member supporter 401a of the rail 400a. The heat insulation member 200b and the heat insulation member supporter 401a may be connected to each other using connection members such as screws, bolts and nuts or rivets. The heat insulation member 200b and the heat insulation member supporter 401a may be connected to each other by adhering a side surface of the heat insulation member supporter 401a and a side surface of the heat insulation member 200b to each other using an adhesive agent. Further, a projecting portion may be formed on one of the heat insulation member 200b and the heat insulation member supporter 401a and a recessed portion which is fitted in the projecting portion may be formed on the other of the heat insulation member 200b and the heat insulation member supporter 401a, and the heat insulation member 200b and the heat insulation member supporter 401a may be connected to each other by making the projecting portion and the recessed portion engage with each other by fitting engagement (press-fit fitting engagement). The heat insulation member 200b and the heat insulation member supporter 401a may be connected to each other by snap-fitting.

This modification is not limited to the case where the heat insulation member 200b is connected to the rail 400a having the heat insulation member supporter 401a, and the heat insulation member 200b may be connected to the rail 400 of the energy storage apparatus 500 according to the embodiment using the above-mentioned various connecting methods.

In this manner, by merely connecting the heat insulation member 200b to the rail 400, 400a, the heat insulation member 200 can be arranged on the side of the energy storage module 100. Due to such a configuration, the mounting of the heat insulation member 200 can be facilitated.

### (Third modification)

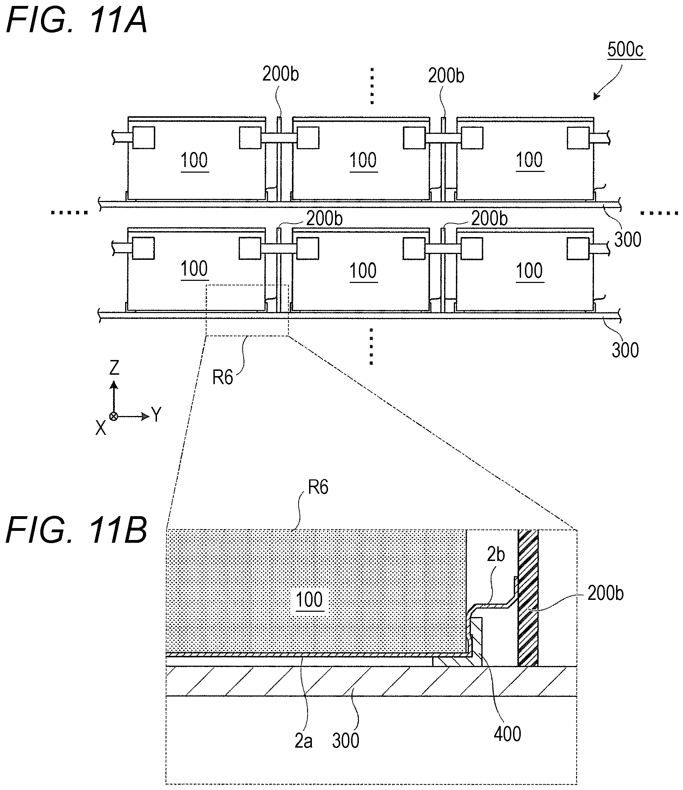

Next, the third modification of the above-mentioned embodiment is described. Fig. 11 shows a front side of an energy storage apparatus 500c according to the third modification of the embodiment of the present invention as viewed in the X axis direction. To be more specific, Fig. 11A shows a front side of the energy storage apparatus 500c as viewed in the X axis direction, and Fig. 11B shows a region R6 surrounded by a broken line in Fig. 11A in an enlarged manner.

As shown in the figure, the energy storage apparatus 500c according to the third modification differs from the energy storage apparatus 500 according to the embodiment with respect to the structure of a lower plate 2a and the structure of a heat insulation member 200b. Other configurations are equal to the corresponding other configurations of the energy storage apparatus 500 according to the embodiment and hence, the description of the other configurations is omitted.

The lower plate 2a differs from the lower plate 2 with respect to a point that a heat insulation member supporter 2b which extends toward a plus side in the Y axis direction of the energy storage module 100 is formed on the lower plate 2a. Although the heat insulation member 200b differs from the heat insulation member 200 of the embodiment, the heat insulation member 200b has the substantially same configuration as the heat insulation member 200b of the second modification and hence, the description of the heat insulation member 200b is omitted.

The heat insulation member supporter 2b is a plate-like member extending toward a plus side in the Y axis direction of the energy storage module 100. The heat insulation member supporter 2b has a side surface thereof connected to the heat insulation member 200b. That is, the heat insulation member 200b is connected to the heat insulation member supporter 2b of the lower plate 2a. The heat insulation member 200b and the heat insulation member supporter 2b may be connected to each other using connection members such as screws, bolt and nuts or rivets. The heat insulation member 200b and the heat insulation member supporter 2b may be connected to each other by adhering a side surface of the heat insulation member supporter 2b and a side surface of the heat insulation member 200b to each other using an adhesive agent. Further, a projecting portion may be formed on one of the heat insulation member 200b and the heat insulation member supporter 2b and a recessed portion which is fitted with the projecting portion may be formed on the other of the heat insulation member 200b and the heat insulation member supporter 2b, and the heat insulation member 200b and the heat insulation member supporter 2b may be connected to each other by making the projecting portion and the recessed portion engage with each other (press-fitting engagement). The heat insulation member 200b and the heat insulation member supporter 2b may be connected to each other by snap-fitting.

This modification is not limited to the case where the heat insulation member 200b is connected to the lower plate 2a having the heat insulation member supporter 2b, and the heat insulation member 200b may be connected to the lower plate 2 of the energy storage apparatus 500 according to the embodiment using the above-mentioned various connecting methods.

In this manner, by merely connecting the heat insulation member 200b to the lower plate 2, 2a which supports the lower portion of the energy storage module 100, the heat insulation member 200b can be arranged on the side of the energy storage module 100. Due to such a configuration, the mounting of the heat insulation member 200b can be facilitated.

### (Fourth modification)

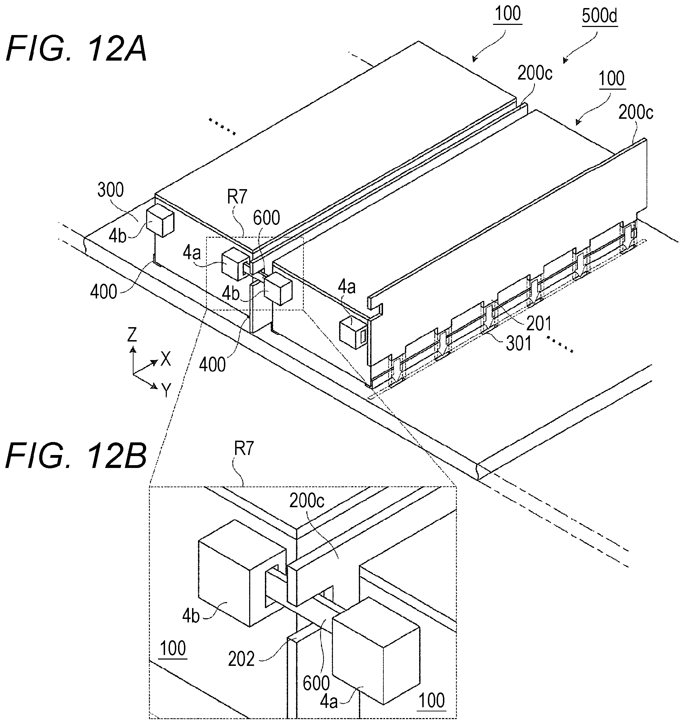

Next, the fourth modification of the above-mentioned embodiment is described. Fig. 12 shows a portion of an external appearance of an energy storage apparatus 500d according to the fourth modification of the embodiment of the present invention in a perspective manner. To be more specific, Fig. 12A shows a portion of an external appearance of the energy storage apparatus 500d in a perspective manner, and Fig. 12B shows a region R7 surrounded by a broken line in Fig. 12A in an enlarged manner.

As shown in the figure, the energy storage apparatus 500d according to the fourth modification differs from the energy storage apparatus 500 according to the embodiment with respect to the structure of a heat insulation member 200c. Other configurations are equal to the corresponding other configurations of the energy storage apparatus 500 according to the embodiment and hence, the description of the other configurations is omitted.

The heat insulation member 200c is arranged in an extending manner more toward a minus-side region in the X axis direction than the heat insulation member 200 of the embodiment. Further, a notch 202 is formed on the heat insulation member 200c at a position where a bus bar 600 which constitutes a connection member passes.

In this manner, the notch 202 is formed on the heat insulation member 200c at the position where the bus bar 600 passes and hence, a region where the heat insulation member 200c is arranged can be expanded toward a minus side in the X axis direction. Accordingly, a region where the heat insulation member 200c partitions a gap between a plurality of energy storage modules 100 can be further widened. Due to such a configuration, even when the plurality of energy storage modules 100 are electrically connected to each other using the bus bars 600, it is possible to effectively acquire the heat insulation between the plurality of energy storage modules 100.

### (Fifth modification)

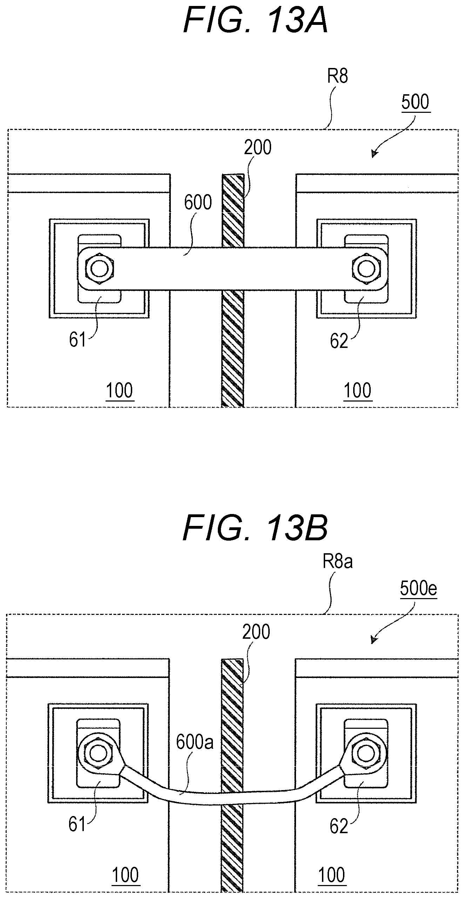

Next, the fifth modification of the above-mentioned embodiment is described. Fig. 13A shows a connection portion of the energy storage apparatus 500 according to the embodiment of the present invention using the bus bar 600 in an enlarged manner. To be more specific, Fig. 13A shows a region R8 surrounded by a broken line in Fig. 2 in an enlarged manner. Fig. 13B shows a connection portion of an energy storage apparatus 500e according to the fifth modification of the embodiment of the present invention using a lead line 600a in an enlarged manner. To be more specific, Fig. 13B shows a region R8a of the energy storage apparatus 500e corresponding to the region R8 surrounded by the broken line in Fig. 2 in an enlarged manner. Both Fig. 13A and Fig. 13B show a state where a positive external terminal cover 4a and a negative external terminal cover 4b are removed.

As shown in the figures, in the energy storage apparatus 500 according to the embodiment, the plurality of energy storage modules 100 are electrically connected to each other using the bus bars 600 each of which is a plate-like metal member. However, as in the case of the energy storage apparatus 500e according to the fifth modification of the embodiment, the plurality of energy storage modules 100 may be electrically connected to each other using the lead lines 600a. In the figures, the terminals of the energy storage modules 100 having the different polarities are connected to each other. However, terminals having the same polarity may be connected to each other.

### (Sixth modification)

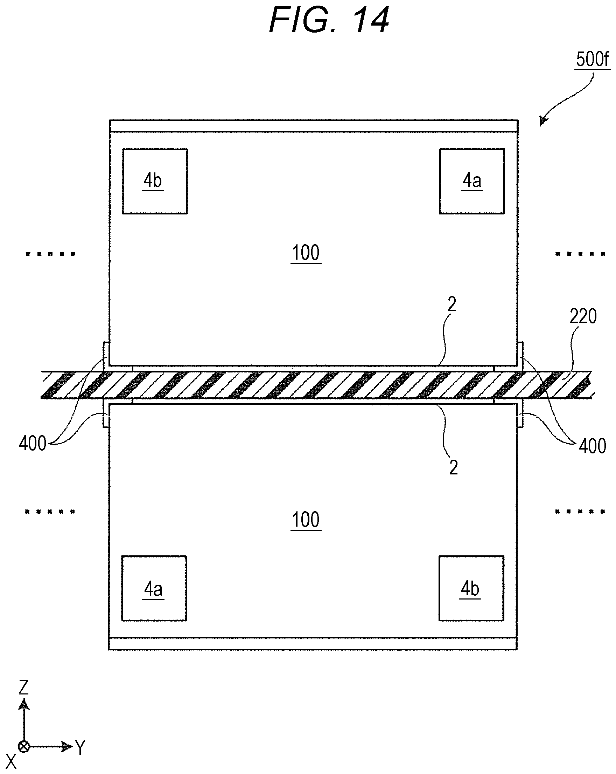

Next, the sixth modification of the above-mentioned embodiment is described. Fig. 14 shows a front side of an energy storage apparatus 500f according to the sixth modification of the embodiment of the present invention as viewed in the X axis direction.

As shown in the figure, the energy storage apparatus 500f according to the sixth modification is configured such that one of two energy storage modules 100 is mounted on an upper surface of a heat insulation member 220, and the other is connected to a lower surface of the heat insulation member 220 in a suspended manner. In this case, two rails 400 are mounted on both the upper side and the lower side of the heat insulation member 200, and the energy storage module 100 is slidably connected to the two rails 400. That is, the lower energy storage module 100 is supported by the two rails 400. Even in the energy storage apparatus 500f having such a configuration, the heat insulation members 220 are arranged between the plurality of energy storage modules 100 and hence, it is possible to reduce an adverse effect caused by the transfer of heat to another energy storage module 100 from one energy storage module 100.

In Fig. 14, the energy storage apparatus 500f is configured such that the energy storage modules 100 are arranged on upper and lower sides of the heat insulation member 220 while sandwiching the heat insulation member 220 therebetween. However, the energy storage apparatus 500f may be configured such that the energy storage modules 100 are arranged on left and right sides of the heat insulation member 220 while sandwiching the heat insulation member 220 therebetween by rotating the energy storage apparatus 500f by 90 degrees.

Although the energy storage apparatus according to the embodiment of the present invention has been described heretofore, the present invention is not limited to the above-mentioned embodiment. That is, it should be construed that the embodiment disclosed herein is merely illustrative but not restrictive in all aspects. The scope of the present invention is not determined by the above-mentioned description but is determined by claims, and it is intended that all modifications which fall within the meaning and the scope equivalent to claims are also included in the scope of the present invention. Further, the configurations which are made by combining any components which the above-mentioned embodiment includes are also included in the scope of the present invention.

For example, in the above-mentioned embodiment and the modifications of the embodiment, the plurality of energy storage modules 100 are arranged, and the heat insulation members 200, 200a to 200c are arranged between the plurality of energy storage modules 100. However, the present invention is not limited to such configurations, and the energy storage apparatus may be constituted of one energy storage module 100 and a heat-sensitive component arranged adjacent to the energy storage module 100. That is, the configuration may be adopted where a heat insulation member is arranged between the energy storage module and the heat-sensitive component. The heat-sensitive component is an element which is degraded in function due to heat, for example, electric equipment or a container (outer covering) made of a material having a melting point lower than a predetermined temperature. To be more specific, the electric equipment is the above-mentioned energy storage module, a monitoring printed circuit board, an inverter circuit or the like. As the container (or outer covering) having a melting point lower than a predetermined temperature, a container (outer covering) made of a material having a melting point equal to below a melting point of the outer covering 7 of the energy storage module 100 may be named. The above-mentioned "melting point" may be referred to as "glass transition temperature". "Degraded in function due to heat" includes a state where an operation becomes out of control (erroneous operation) by heat, a state where the element is thermally deformed, and a state where the strength of an element becomes lower than a predetermined strength by heat.

Even in such a configuration, the heat insulation member is arranged between the energy storage module and the heat-sensitive component. Accordingly, it is possible to suppress the transfer of heat generated in the energy storage module to the heat-sensitive component. Due to such a configuration, it is possible to reduce an adverse effect caused by the transfer of heat to the heat-sensitive component from the energy storage module. The heat insulation member may be arranged on a side surface of the heat-sensitive component on an energy storage module 100 side. In this case, the heat insulation member may be arranged in a region of the side surface of the heat-sensitive component on an energy storage module 100 side facing the discharge port 15 of the energy storage module 100. Further, the energy storage module 100 and the heat-sensitive component may be connected to a retainer which constitutes a connection member. That is, both the energy storage module 100 and the heat-sensitive component may be supported on the retainer. In this case, the connection member is not limited to the retainer, and any other connection members may be adopted provided that a connection member can physically connect the energy storage module 100 and the heat-sensitive component to each other.

In the above-mentioned embodiment and the modifications of the embodiment, the heat insulation member 200 arranged on the side of the energy storage module 100 is constituted of one heat insulation member extending in the X axis direction. However, the present invention is not limited to such a configuration, and the heat insulation member 200 may be a heat insulation member having the configuration where the heat insulation member is divided into parts in the X axis direction. In this manner, by adopting the heat insulation member which is divided into parts in the X axis direction, the length of the heat insulation member in the X axis direction can be shortened and hence, it is possible to prevent the heat insulation member from being bent with respect to the X axis direction. Accordingly, in connecting the heat insulation member at a predetermined position, time and effort for straightening the bending of the heat insulation member can be reduced. For example, as in the case of the embodiment, at the time of fitting the projecting portions of the heat insulation member in the slits 301 formed in the mounting shelf 300, the projecting portions can be easily inserted into the slits 301.

Further, in the above-mentioned embodiment and the modifications of the embodiment, the heat insulation members 200, 200a to 200c are arranged on the respective sides of the plurality of energy storage modules 100 in the Y axis direction. However, the present invention is not limited to such a configuration, and the heat insulation members may be arranged on sides of the plurality of energy storage modules 100 in the Z axis direction or may be arranged on sides of the plurality of energy storage modules 100 in the X axis direction. When the heat insulation members are arranged on the sides of the plurality of energy storage modules 100 in the Z axis direction, the heat insulation member may be mounted on an upper surface or a lower surface of the mounting shelf 300, or the mounting shelf 300 per se may form a heat insulation member.

Further, in the above-mentioned embodiment, the plurality of slits 301 are arranged next to each other in the X axis direction on the mounting shelf 300. However, the present invention is not limited to such a configuration, and one groove extending in the X axis direction may be formed on the mounting shelf 300.

The present invention is applicable to an energy storage apparatus which includes an energy storage module where an energy storage device is accommodated in an outer covering, and a heat-sensitive component which is arranged on a side of the energy storage module and the like.

## Claims

1. An energy storage apparatus (500) comprising:
an energy storage module (100) including one or more energy storage devices (20);
a heat-sensitive component which is disposed on a side of the energy storage module (100) and is degraded in function due to heat; and
a heat insulation member (200) which is disposed between the energy storage module (100) and the heat-sensitive component;
wherein the one or more energy storage devices (20) have a safety valve (21),
**characterized in that**
the energy storage module (100) has a discharge port (15) for discharging a substance through the safety valve (21) to the outside, and
the heat insulation member (200) is arranged between the discharge port (15) of the energy storage module (100) and the heat-sensitive component.

2. The energy storage apparatus (500) according to claim 1, wherein
the one or more energy storage devices (20) include, on a surface where the safety valve (21) is disposed, a positive terminal (23) and a negative terminal (24) projecting toward the outside,
the safety valve (21) is disposed between the positive terminal (23) and the negative terminal (24), and
the energy storage apparatus (500) further includes an electric member which is disposed in a space defined between the positive terminal (23) and the negative terminal (24).

3. The energy storage apparatus (500) according to claim 1 or 2, wherein
the energy storage apparatus (500) further includes a mounting shelf (300) on which the energy storage module (100) is mounted, and
the heat insulation member (200) is mounted on the mounting shelf (300) in an erected manner.

4. The energy storage apparatus (500) according to any one of claims 1 to 3, wherein
the heat-sensitive component is an electric equipment, and
the electric equipment includes a resin-made outer covering (7).

5. The energy storage apparatus (500) according to claim 5, wherein
the heat insulation member (200) is made of a material having a higher heat insulation property than a material used for forming the outer covering (7).

6. The energy storage apparatus (500) according to any one of claims 1 to 5, wherein
the energy storage module (100) further includes a module outer covering which accommodates the one or more energy storage devices (20),
the module outer covering has a side wall with an opening formed, and
the heat insulation member (200) faces at least the opening.

7. The energy storage apparatus (500) according to any one of claims 1 to 6, wherein
the energy storage apparatus (500) further includes a connection member which connects the energy storage module (100) and the heat-sensitive component to each other, and
the heat insulation member (200) is arranged at a position where the heat insulation member (200) does not interfere with the connection member.

8. The energy storage apparatus (500) according to any one of claims 1 to 7, wherein
a height of the heat insulation member (200) is 50% or more of a height of a side surface of the energy storage module (100) which faces the heat insulation member (200).

9. The energy storage apparatus (500) according to any one of claims 1 to 8, wherein
the energy storage module (100) has a profile of a rectangular parallelepiped shape elongated in a direction that a side surface of the energy storage module (100) which faces the heat insulation member (200) extends.

10. The energy storage apparatus (500) according to any one of claims 1 to 9, wherein
one side surface of the energy storage module (100) orthogonal to a side surface of the energy storage module (100) which faces the heat insulation member (200) is configured to allow a cooling medium to flow into the energy storage module (100).

11. The energy storage apparatus (500) according to any one of claims 1 to 10, wherein
the energy storage apparatus (500) includes a plurality of the energy storage modules (100),
the plurality of energy storage modules (100) are arranged such that a positive external terminal (61) and a negative external terminal (62) of each energy storage module (100) are directed in the same direction, and
the heat insulation member (200) is arranged between two energy storage modules (100) arranged adjacent to each other.

## Patentansprüche

1. Energiespeichervorrichtung (500), die umfasst:
ein Energiespeicher-Modul (100), das eine oder mehrere Energiespeicher-Einrichtung/en (20) enthält;
eine wärmeempfindliche Komponente, die an einer Seite des Energiespeicher-Moduls (100) angeordnet ist und deren Funktion durch Wärme beeinträchtigt wird; sowie
ein Wärmeisolierelement (200), das zwischen dem Energiespeicher-Modul (100) und der wärmeempfindlichen Komponente angeordnet ist;
wobei die eine oder mehreren Energiespeicher-Einrichtung/en (20) ein Sicherheitsventil (21) hat/haben,
**dadurch gekennzeichnet, dass**
das Energiespeicher-Modul (100) eine Ableitöffnung (15) zum Ableiten einer Substanz über das Sicherheitsventil (21) nach außen aufweist, und
das Wärmeisolierelement (200) zwischen der Ableitöffnung (15) des Energiespeicher-Moduls (100) und der wärmeempfindlichen Komponente angeordnet ist.

2. Energiespeichervorrichtung (500) nach Anspruch 1, wobei
die eine oder mehreren Energiespeichereinrichtung/en (20) an einer Fläche, an der das Sicherheitsventil (21) angeordnet ist, einen positiven Anschluss (23) und einen negativen Anschluss (24) enthält/enthalten, die nach außen vorstehen,
das Sicherheitsventil (21) zwischen dem positiven Anschluss (23) und dem negativen Anschluss (24) angeordnet ist, und
die Energiespeichervorrichtung (500) des Weiteren ein elektrisches Element enthält, das in einem Raum angeordnet ist, der zwischen dem positiven Anschluss (23) und dem negativen Anschluss (24) ausgebildet ist.

3. Energiespeichervorrichtung (500) nach Anspruch 1 oder 2, wobei
die Energiespeichervorrichtung (500) des Weiteren eine Anbringungsplatte (300) enthält, an der das Energiespeicher-Modul (100) angebracht ist, und
das Wärmeisolierelement (200) aufrechtstehend an der Anbringungsplatte (300) angebracht ist.

4. Energiespeichervorrichtung (500) nach einem der Ansprüche 1 bis 3, wobei
die wärmeempfindliche Komponente eine elektrische Einrichtung ist, und
die elektrische Einrichtung eine aus Kunststoff bestehende Außenverkleidung (7) enthält.

5. Energiespeichervorrichtung (500) nach Anspruch 4, wobei
das Wärmeisolierelement (200) aus einem Material besteht, das ein stärkeres Wärmeisoliervermögen hat als ein zum Ausbilden der Außenverkleidung (7) eingesetztes Material.

6. Energiespeichervorrichtung (500) nach einem der Ansprüche 1 bis 5, wobei
das Energiespeicher-Modul (100) des Weiteren eine Modul-Außenverkleidung enthält, die die eine oder mehreren Energiespeichereinrichtung/en (20) aufnimmt,
die Modul-Außenverkleidung eine Seitenwand mit einer darin ausgebildeten Öffnung hat, und
das Wärmeisolierelement (200) wenigstens der Öffnung zugewandt ist.

7. Energiespeichervorrichtung (500) nach einem der Ansprüche 1 bis 6, wobei
die Energiespeichervorrichtung (500) des Weiteren ein Verbindungselement enthält, das das Energiespeicher-Modul (100) und die wärmeempfindliche Komponente miteinander verbindet, und
das Wärmeisolierelement (200) an einer Position angeordnet ist, an der sich das Wärmeisolierelement (200) nicht mit dem Verbindungselement überlagert.

8. Energiespeichervorrichtung (500) nach einem der Ansprüche 1 bis 7, wobei
eine Höhe des Wärmeisolierelementes (200) 50 % oder mehr einer Höhe einer Seitenfläche des Energiespeicher-Moduls (100) beträgt, die dem Wärmeisolierelement (200) zugewandt ist.

9. Energiespeichervorrichtung (500) nach einem der Ansprüche 1 bis 8, wobei
das Energiespeicher-Modul (100) ein Profil eines Quaders hat, dessen Längsrichtung in einer Richtung verläuft, in der sich eine Seitenfläche des Energiespeicher-Moduls (100) erstreckt, die dem Wärmeisolierelement (200) zugewandt ist.

10. Energiespeichervorrichtung (500) nach einem der Ansprüche 1 bis 9, wobei
eine Seitenfläche des Speicher-Moduls (100), die rechtwinklig zu einer Seitenfläche des Energiespeicher-Moduls (100) ist, die dem Wärmeisolierelement (200) zugewandt ist, so eingerichtet ist, dass sie zulässt, dass ein Kühlmittel in das Energiespeicher-Modul (100) einströmt.

11. Energiespeichervorrichtung (500) nach einem der Ansprüche 1 bis 10, wobei
die Energiespeichervorrichtung (500) eine Vielzahl der Energiespeicher-Module (100) enthält,
die Vielzahl von Energiespeicher-Modulen (100) so angeordnet sind, dass ein positiver Außenanschluss (61) und ein negativer Außenanschluss (62) jedes Energiespeicher-Moduls (100) in der gleichen Richtung ausgerichtet sind, und
das Wärmeisolierelement (200) zwischen zwei nebeneinander angeordneten Energiespeicher-Modulen (100) angeordnet ist.

## Revendications

1. Appareil de stockage d'énergie (500) comprenant :
un module de stockage d'énergie (100) comprenant un ou plusieurs dispositifs de stockage d'énergie (20) ;
un composant sensible à la chaleur qui est disposé sur un côté du module de stockage d'énergie (100) et qui se dégrade avec la chaleur durant son fonctionnement ; et
un élément d'isolation thermique (200) qui est disposé entre le module de stockage d'énergie (100) et le composant sensible à la chaleur ;
où le un ou plusieurs dispositifs de stockage d'énergie (20) présentent une soupape de sécurité (21),
**caractérisé en ce que**
le module de stockage d'énergie (100) présente un orifice d'évacuation (15) pour évacuer une substance à travers la soupape de sécurité (21) vers l'extérieur, et
l'élément d'isolation thermique (200) est disposé entre l'orifice d'évacuation (15) du module de stockage d'énergie (100) et le composant sensible à la chaleur.

2. Appareil de stockage d'énergie (500) selon la revendication 1, dans lequel
le un ou plusieurs dispositifs de stockage d'énergie (20) comprennent, sur une surface où la soupape de sécurité (21) est disposée, une borne positive (23) et une borne négative (24) se projetant vers l'extérieur,
la soupape de sécurité (21) étant disposée entre la borne positive (23) et la borne négative (24), et
l'appareil de stockage d'énergie (500) comprenant en outre un élément électrique qui est disposé dans un espace défini entre la borne positive (23) et la borne négative (24).

3. Appareil de stockage d'énergie (500) selon la revendication 1 ou 2, dans lequel
l'appareil de stockage d'énergie (500) comprend en outre une étagère de montage (300) sur laquelle le module de stockage d'énergie (100) est monté, et
l'élément d'isolation thermique (200) est monté sur l'étagère de montage (300) d'une manière érigée.

4. Appareil de stockage d'énergie (500) selon l'une quelconque des revendications 1 à 3, dans lequel
le composant sensible à la chaleur est un équipement électrique, et
l'équipement électrique comprend un revêtement externe en résine (7).

5. Appareil de stockage d'énergie (500) selon la revendication 4, dans lequel
l'élément d'isolation thermique (200) est constitué d'un matériau présentant une propriété supérieure d'isolation thermique par rapport à un matériau utilisé pour former le revêtement externe (7).

6. Appareil de stockage d'énergie (500) selon l'une quelconque des revendications 1 à 5, dans lequel
le module de stockage d'énergie (100) comprend en outre un revêtement externe de module qui accueille le un ou plusieurs dispositifs de stockage d'énergie (20),
le revêtement externe de module présente une paroi latérale avec une ouverture formée, et
l'élément d'isolation thermique (200) fait face au moins à l'ouverture.

7. Appareil de stockage d'énergie (500) selon l'une quelconque des revendications 1 à 6,
l'appareil de stockage d'énergie (500) comprenant en outre un élément de connexion qui connecte le module de stockage d'énergie (100) et le composant sensible à la chaleur l'un à l'autre, et
l'élément d'isolation thermique (200) est disposé à une position où l'élément d'isolation thermique (200) n'interfère pas avec l'élément de connexion.

8. Appareil de stockage d'énergie (500) selon l'une quelconque des revendications 1 à 7, dans lequel
une hauteur de l'élément d'isolation thermique (200) est de 50 % ou plus d'une hauteur d'une surface latérale du module de stockage d'énergie (100) qui fait face à l'élément d'isolation thermique (200).

9. Appareil de stockage d'énergie (500) selon l'une quelconque des revendications 1 à 8, dans lequel
le module de stockage d'énergie (100) présente un profil d'une forme rectangulaire parallélépipédique allongée dans un sens tel qu'une surface latérale du module de stockage d'énergie (100) qui fait face à l'élément d'isolation thermique (200) s'étend.

10. Appareil de stockage d'énergie (500) selon l'une quelconque des revendications 1 à 9, dans lequel
une surface latérale du module de stockage d'énergie (100) orthogonale à une surface latérale du module de stockage d'énergie (100) qui fait face à l'élément d'isolation thermique (200) est configurée pour permettre à un milieu de refroidissement de s'écouler dans le module de stockage d'énergie (100).

11. Appareil de stockage d'énergie (500) selon l'une quelconque des revendications 1 à 10, dans lequel
l'appareil de stockage d'énergie (500) comprend une pluralité des modules de stockage d'énergie (100),
la pluralité des modules de stockage d'énergie (100) étant disposée de sorte qu'une borne externe positive (61) et une borne externe négative (62) de chaque module de stockage d'énergie (100) soient dirigées dans le même sens, et
l'élément d'isolation thermique (200) est disposé entre deux modules de stockage d'énergie (100) disposés de manière adjacente l'un par rapport à l'autre.
